# EUROPEAN PATENT SPECIFICATION

(11) **EP 1 599 276 B1**
(45) Date of publication and mention of the grant of the patent: **14.05.2008**
(21) Application number: 04718162.3
(22) Date of filing: 05.03.2004
(51) Int. Cl.: B01D 63/04, B01D 61/20, B01D 65/08, B01D 35/30, B01D 65/10, C02F 1/44

(54) **SUBMERGIBLE MEMBRANE MODULAR FILTRATION DEVICE HAVING REPLACEABLE MEMBRANE ELEMENTS**
TAUCHBARES MEMBRANMODUL MIT AUSTAUSCHBAREN MEMBRANELEMENTEN
DISPOSITIF DE FILTRAGE MODULAIRE A MEMBRANES SUBMERSIBLES COMPORTANT DES ELEMENTS MEMBRANE REMPLACABLES

(30) Priority: 05.03.2003 US 452149 P; 17.02.2004 US 545110 P
(43) Date of publication of application: 30.11.2005
(73) Proprietor: HYDRANAUTICS, Oceanside, CA 92054 (US)
(72) Inventor: HERMANSON, Christopher, G., San Diego, CA 92127 (US); MURKUTE, Pravin, Encinitas, CA 92024 (US); BARTELS, Craig, R., San Diego, CA 92128 (US); WILF, Mark, San Diego, CA 92122 (US); PEARCE, Graeme, K., Little Eastfield, Reading, RG8 7EJ (GB); DeWINTER, Dirk, M., Vista, CA 92084 (US); SCHILLING, Marco, A., El Cajon, CA 92021 (US)
(74) Representative: Bohnenberger, Johannes
(86) International application number: PCT/US2004/007048
(87) International publication number: WO 2004/078326

(56) References cited:
- WO-A-00/21640
- WO-A-00/21890
- WO-A-01/36074
- WO-A-88/01895
- WO-A-96/41676
- WO-A-02/094421
- US-A- 4 724 900
- US-A- 5 139 669
- US-A- 5 922 201
- US-A- 6 074 559
- US-A1- 2001 027 951
- US-A1- 2002 148 767
- PATENT ABSTRACTS OF JAPAN vol. 1995, no. 11, 26 December 1995 (1995-12-26) & JP 7 194943 A (DAICEL CHEM IND LTD), 1 August 1995 (1995-08-01)

## Description

### BACKGROUND OF THE INVENTION

There is a growing trend toward using submerged membranes for water and waste water treatment. A typical submerged membrane system consists of hollow fiber or plate-and-frame membranes completely submerged in a tank containing the substrate to be filtered, and filtration is effected by applying vacuum to the filtrate side. A continuous or intermittent stream of air rises up along or orthogonal to the membrane surface and keeps it clean by scouring foulants deposited on the surface. Submerged membrane systems have lower operating costs than pressurized systems due to the low driving pressure required to effect filtration. Additionally, for large water treatment plants, the capital cost of submerged membrane systems may be significantly lower than for pressurized systems.

Various designs for submerged systems are known. For example, U:S. Patent No. 5,639,373 describes a frameless array of vertically held hollow fiber membranes with air diffusers at the bottom of the array. A module with fibers held vertically between potted headers in a cylindrical module is described in U.S. Patent No. 6,156,200, in which the lower fiber ends are sealed and the aeration holes are in the lower potting header. One or more vertical tubes may be installed symmetrically within the module for additional aeration. In such designs, the fibers are permanently potted in the module.

A submerged membrane in a plate-and-frame design is described for example in U.S. Patent No. 5,482,625. In such a module, flat-sheet membranes are held in a compartment with air diffusers installed under the membranes. This design has disadvantages, however. Due to the plate and frame design, the packing density is low and the membranes cannot be backwashed.

Designs are also known which use hollow fiber membranes held horizontally, such as described in U.S. Patent No. 5,922,201, in which the vertical air flow is orthogonal to the longitudinal axis of the membrane. An alternate design is described in WO 01/36074A1, which consists of horizontally held fibers between vertically extending headers. This design has a relatively high packing density. However, in horizontal designs, a fraction of the surface area of the fibers may not be exposed to the air during aeration.

Various designs for hollow fiber connection to a collection header are known. For example, U.S. Patent No. 6,325,928 describes a filter element that has an associated releasable and resealable water tight fitting between the hollow fiber filter element and membrane filtration rack. In this case the hollow fibers are permanently potted into the collection headers of the element. This design has disadvantages in that the filter element, comprising hollow fibers potted permanently and directly into two collection headers, is the smallest separable unit of the membrane filtration system.

U.S. Patent No. 6,214,226 describes a hollow fiber membrane module wherein the hollow fiber membrane is potted directly into a collecting pipe in a fluid tight manner. Pluralities of the hollow fiber membrane modules are positioned proximately to form a hollow fiber membrane module unit. Again, the disadvantage is the hollow fiber membrane bundle is potted permanently and directly into the collecting header of the module thereby making the whole membrane module the smallest separable unit in the device.

U.S. Patent No. 5,405,528 describes a replaceable filter cartridge comprising a hollow fiber bundle terminating into symmetrical headers on opposing ends of the cartridge. The headers comprise a tube within a tube structure capable of conducting two different fluids independently. The cartridge forms a releasable, fluid tight connection to a manifold at the end of the filter cartridge. The releasable, fluid tight connection between cartridge and manifold is accomplished by means of one or more axially slideable connecting sleeves. Rows of filter cartridges are formed by connecting cartridges side by side into the manifold. Once again, the hollow fiber is potted permanently and directly into the collection header of the cartridge.

U.S. Patent No. 5,480,553 describes a hollow fiber membrane module comprising hollow fibers potted permanently and directly into a single collection header. A structural member supports the collection header and associated hollow fibers and also provides an enclosure for the hollow fibers. As in the patents described above, the hollow fibers are potted directly into a collection header making the whole membrane module the smallest separable unit in the device.

Each of the documents US-A-20020148767, WO-A-02094421 and WO-A-0136074 discloses a modular membrane filtration device comprising a plurality of potted hollow fibre elements which are received in an integral permeate collection header having a plurality of receptacles and wherein the elements are realisably received. Document WO-A-9641676 discloses a modular membrane filtration device, wherein individual elements can be hydraulically isolated from the permeate side by means of a piston. All of these known hollow fiber modules and connections have the disadvantage that maintenance of the fiber membranes is difficult and may require isolation of the entire module, thus resulting in downtime of the filtration system. There thus remains a need in the art for an improved membrane filtration system designed for easy replaceability of the component membrane fiber bundles in use without concurrent replacement of the collection header and which would desirably exhibit improved aeration and cleaning.

### SUMMARY OF THE INVENTION

Modular membrane filtration devices are provided for outside-in membrane filtration of feed liquid containing suspended solids. The devices comprise at least one module having at least one header which is an integral permeate collection header having a plurality of receptacles for receiving a plurality of membrane elements. Each membrane element is a potted hollow fiber membrane bundle comprising a plurality of hollow fiber membranes oriented transverse to the at least one header. Each membrane element has a separable connection between a potted end of the hollow fiber membrane bundle and a receptacle in the permeate collection header, and the separable connection provides a watertight hydraulic connection between the permeate collection header and the lumens of the hollow fiber membranes. The modular device further comprises a releasable closure for detaching one of the membrane elements from one of the receptacles such that when the element is detached, the closure hydraulically isolates said receptacle from the feed liquid.

According to one aspect of the present invention, a bundle connector is provided into which one end of a bundle of hollow fiber membranes is potted. Each end of the hollow fiber bundle is provided with a bundle connector, and the respective bundle connectors are plugged into reducer elements (receptacles) in opposing collection headers, which receive permeate liquid from the hollow fiber lumens. The bundle connector comprises an annular ring having interior features for receiving and holding the potted end of a fiber membrane bundle and exterior locking features for forming a twist-lock or snap-lock connection with the reducer receptacle, which has mating elements for engaging the twist-lock or snap-lock elements of the bundle connector. The exterior surface of the bundle connector is provided with sealing elements for forming a seal between the exterior of the bundle connector and the interior of the reducer receptacle.

According to another aspect of the invention, the device defines outer faces and comprises a shroud material covering the outer faces. The shroud material surrounds the plurality of hollow fiber membranes and contains energy produced by aeration within a volume confined by the shroud material.

This invention represents an improvement over the previously discussed filtration devices, in that it allows the hollow fiber membrane bundle to be separated from the collection header in use. Therefore, hollow fiber membrane bundles can be serviced independently of the collection header in use. Prior art devices do not allow the hollow fiber membrane to be serviced independently of the collection header in use.

### BRIEF DESCRIPTION OF THE SEVERAL VIEWS OF THE DRAWINGS

The foregoing summary, as well as the following detailed description of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown. In the drawings:

Fig. 1 is a simplified perspective view of a single module of a membrane filtration device according to one embodiment of the present invention with a partially broken away shroud material covering the open faces of the module;

Fig. 2 is a simplified top view of a lower permeation collection header of the module of Fig. 1 with central aeration diffuser;

Fig. 3 is a schematic front perspective view of a fiber membrane bundle end potted in a bundle connector and installed in a receptacle of a collection header;

Fig. 4 is a schematic flow diagram of a submerged modular membrane filtration system according to one embodiment of the present invention;

Fig. 5 is a top perspective view of the bundle connector of Fig. 3 without the potted fiber bundle end and not installed in a collection header receptacle;

Fig. 6 is a bottom perspective view of the bundle connector shown in Fig. 5;

Fig. 7 is a top perspective view of the bundle connector of Fig. 5 installed in a receptacle of the collection header, but without the potted fiber bundle end;

Fig. 8 is a simplified perspective view of a submergible modular membrane filtration device having five modules of the type shown in Fig. 1 with some of the related piping;

Fig. 9 is a simplified schematic perspective view, partially in section, illustrating a fiber membrane bundle end potted in a bundle connector and installed in a receptacle of a permeation collection header, with a central axial tube for flow of feed liquid or aeration fluid;

Fig. 10 is a simplified top perspective view of a pair of filtration modules similar to Fig. 1, but with the membrane elements running horizontally between vertical permeate collection headers; and

Fig. 11 is a simplified schematic perspective view of a modular membrane filtration device having four sets of vertically stacked filtration modules with associated piping.

### DETAILED DESCRIPTION OF THE INVENTION

Submergible modular membrane filtration devices are provided for membrane separation to filter suspended solids from a liquid phase. Such devices would be particularly appropriate for filtration of municipal drinking water, waste water, and sea water, but would also be applicable for other filtration applications known in the art or to be developed.

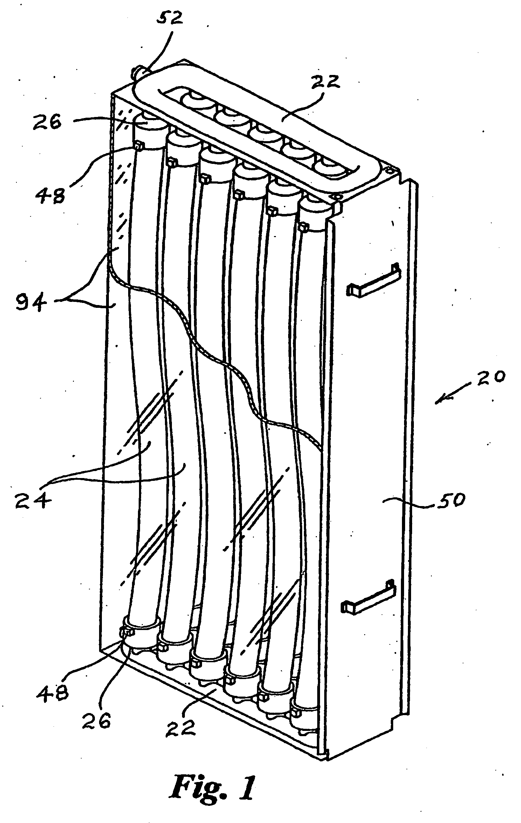

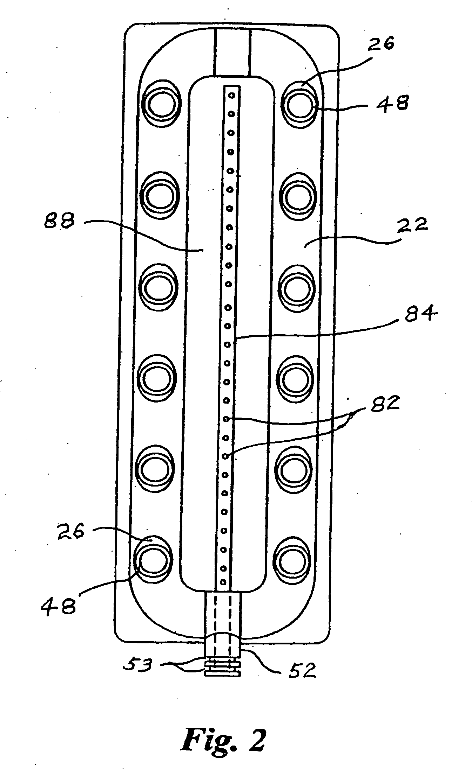

As shown in Fig. 1, a filtration device preferably comprises at least one module 20. Each module preferably comprises two headers 22 and a plurality of separate and distinct membrane elements 24. At least one of the headers is an integral permeate collection header having a plurality of receptacles 26 (see Fig. 2). In a preferred embodiment, both of the headers are permeate collection headers. The permeate collection headers function to collect the filtered liquid, and the receptacles 26, described in more detail below, are designed to receive the plurality of membrane elements 24.

It is preferred that each module comprises about 1 to 100 membrane elements, more preferably about 5 to about 15, depending on the desired size of the header. It is preferable to operate a module with a bundle element connected in each receptacle, which yields the greatest amount of permeate and thus optimizes the economics of the filtration process. However, if the number of membrane elements is less than the number of receptacles in a header, the unused receptacles are desirably sealed off with a bundle connector having a cap overmold, or with a similar type of closure which would accomplish the same purpose.

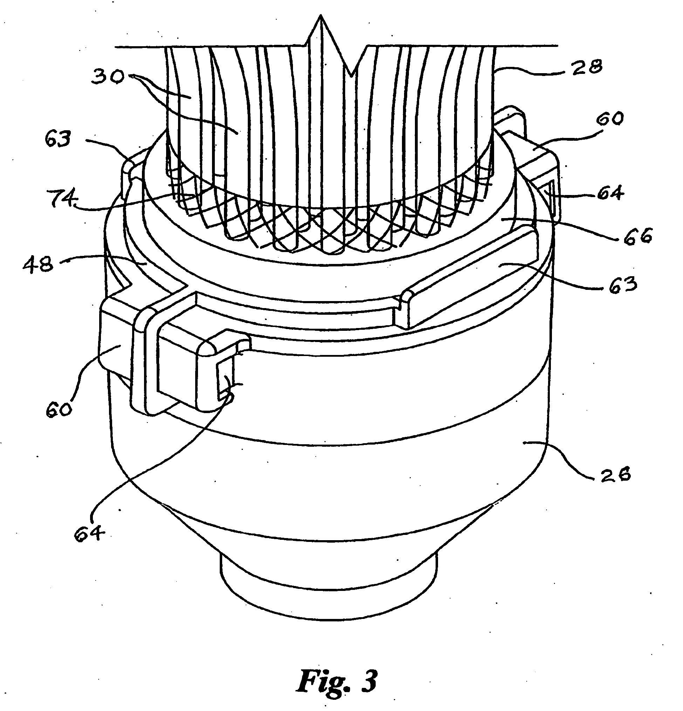

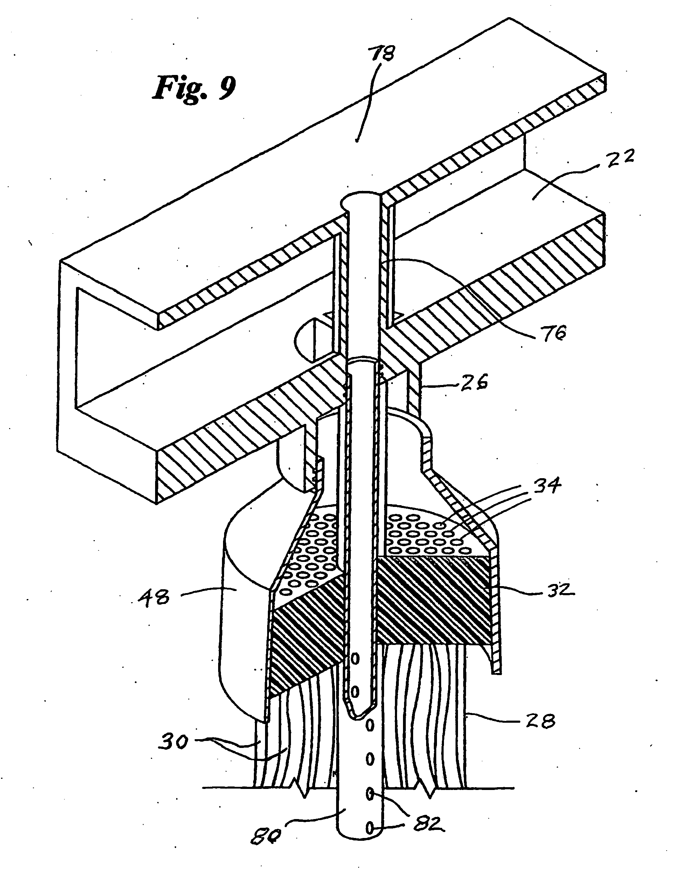

As shown in Figs. 3 and 9, each membrane element in the device comprises at least one potted hollow fiber membrane bundle 28 having a plurality of hollow fiber membranes 30 oriented transverse to the planes of the headers. Various types of hollow fiber membranes and potted bundles thereof are known in the art and may be employed in the modules of the present invention. When a membrane clement is inserted into a receptacle 26 in the permeate collection header, a separable connection between the potted end 32 of the hollow fiber membrane bundle 28 and the receptacle is formed. This separable connection provides a watertight hydraulic connection between the permeate collection header and the lumens 34 of the membranes in the membrane bundle.

The entire modular membrane filtration device 36 may be submerged into a tank 38 holding the liquid phase 40 containing the suspended solids to be filtered, such that an outer surface of each membrane in the component modules is in contact with the liquid phase. Vacuum may be applied inside the permeate collection headers so that water or other liquid to be filtered is drawn across the fiber surfaces, into the fiber lumens, and the permeate or filtrate flows into the collection headers. This vacuum may be created, for example, by a suction device, such as a vacuum pump 42, or by a siphon created by a difference in elevation between the permeate collection header and the level of liquid phase in the tank. When the fibers are backwashed with permeate via backwash pump 44 to remove foulants deposited on their surfaces, water flows from the permeate headers into the fiber lumens, and then across the membrane surfaces into the tank 38 containing the liquid to be filtered. Alternatively or additionally, a continuous or intermittent stream of air 46 is provided, which rises up along or orthogonal to the membrane surfaces to keep them clean by scouring foulants deposited on the surfaces. The modular membrane filtration device may also be placed in a pressurized enclosure, such as a pressure vessel or pressurized tank, so that the pressure in the enclosure may be used as the driving force for membrane filtration.

As shown in Figs.1, 3 and 9, both ends of each fiber membrane bundle are potted in a preferably cylindrical end portion or bundle connector 48 to firmly secure the ends of the fibers. Suitable potting materials 66, e.g., epoxies, and potting methods are known in the art and will not be further described here. The cylindrical bundle connector 48 is preferably about 20 to 100 mm in diameter, depending on the outer diameter of the fibers to be potted and the desired fiber packing density. The "fiber packing density" refers to the percentage of the inside surface area of the potted bundle connector that is occupied by fibers. For example, a 2 inch (50.8 mm) inner diameter bundle containing 14,300 polypropylene fibers of 0.3 mm OD has a packing density of 47%. It is preferred that the packing density of the bundle elements be about 30% to about 90%, more preferably about 40 % to about 60%. The bundle connector 48 is distinct from the permeate collection header 22 and may be removably inserted into a receptacle 26 in the header, as described more fully below.

Each of the headers in a module (both of which are preferably permeate collection headers) are integral; preformed parts, as shown in Fig. 2, which may be injection molded, blow molded, rotational molded, injection/blow molded, or machined, for example. Headers are preferably formed from a polymeric material, such as polypropylene, polyphenylene oxide (PPO), polyethylene, polysulfone, polyethersulfone, polyvinyl chloride, or acrylonitrile-butadiene-styrene (ABS) resin. The polymeric material may be optionally compounded, such as with glass or talc, to provide greater yield strength and to better handle large backwash pressure. A header which is presently preferred is blow molded from polypropylene.

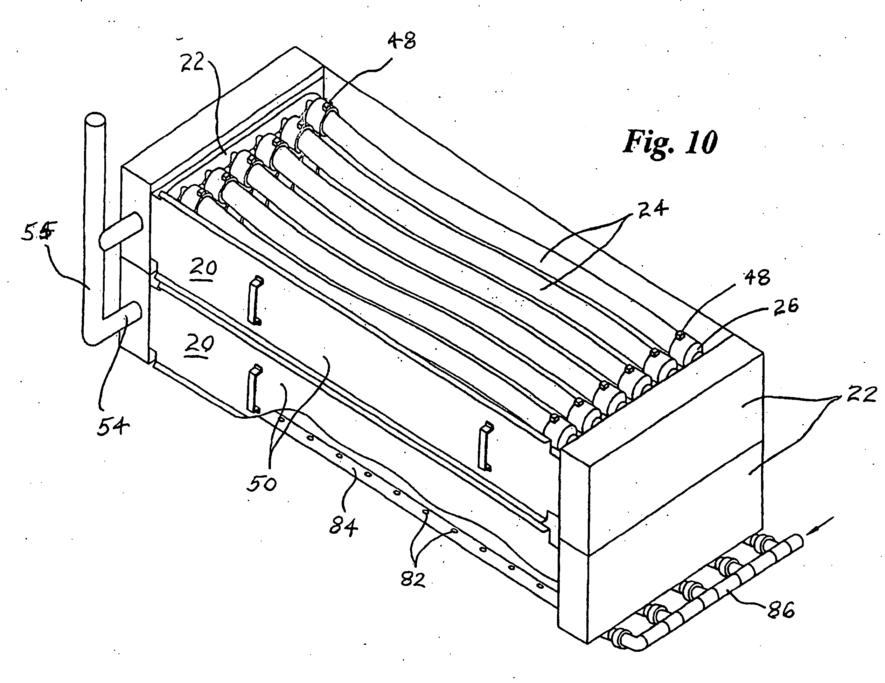

Preferably, the headers are parallel to one another and may be spaced vertically apart (as shown in Figs. 1, 8 and 11) or horizontally apart (as shown in Fig. 10) by a fixed distance. In both embodiments, the bundles of hollow fiber membranes are located between two opposing headers and oriented transverse to the major planes of the headers, such that the fibers are parallel or orthogonal to the ground. A vertical arrangement of fibers is preferred because the entire fiber surface is exposed to the air during aeration as the rising air bubbles uniformly aerate the fiber surface. In contrast, in a horizontal arrangement, a fraction of the surface area of the fibers (on the top circumference of the fibers) is not exposed to the cleaning action of aeration. However, a horizontal arrangement may be desirable because free air flow, particularly around the ends of the fibers, may reduce or prevent the accumulation of solids at the potted ends of the fibers, which may occur in a vertical orientation, in which the rising air bubbles and liquid flow are blocked by the potting.

As shown in Figs. 1 and 10, at least one rigid member, preferably a plastic or metal bar or plate 50, fixed to the parallel headers 22 maintains the desired vertical or horizontal distance between them. In the embodiment of Fig. 10, vertically oriented headers are connected by two vertical parallel support structures 50, preferably formed of rigid plastic, which are each attached to the ends of the two opposing headers. These support structures act as walls to maintain the separation between the headers and also contain the aeration energy produced inside the module. However, a module having one or more bars connecting the parallel headers, such as a bar at one or more corners of each opposing header, is also within the scope of the invention.

The length of the rigid member(s) 50 provides a fiber overlength of preferably about 0.2% to about 20%, more preferably greater than 5% to about 10%. In other words, the length of the fibers may be about 0.2% to about 20% longer than the distance between the opposing headers, which distance is maintained by the rigid material.

It is preferred that each hollow fiber membrane in a membrane element have a longitudinal length of about 0.5 to about 2 m and an outer diameter of about 0.1 to 2 mm. Each potted hollow fiber membrane bundle preferably has a diameter of about 20 to 100 mm. In the case of 0.3 mm OD polypropylene fibers, for example, each bundle preferably contains about 5000 to 25,000 fibers, more preferably about 12,000 to about 18,000, and most preferably about 14,000. As another example, in the case of 0.7 mm OD polyethylene fibers, each fiber bundle contains about 2,000 to 5,000 fibers. As previously explained, each of the hollow fiber membranes desirably has an overlength of about 0.2% to about 20%, and more preferably greater than 5% to about 10% of the distance between the opposing headers.

The "packing density" of the modules describes the ratio of the total outside surface area of all of the fibers in the module to the volume occupied by the module. The packing density of the modules may be about 250 to about 900 m²/m³, and is preferably about 400 to about 800 m²/m³.

In one embodiment, each permeate collection header 22 contains at least one row of receptacles 26 in the form of slots or openings on the face opposing the other header (see Fig. 2). Each row preferably contains about 2 to 50 slots, and each permeate collection header preferably contains about 1 to 50 rows of slots. A preferred header contains two rows of six slots, as shown in Fig. 2, and thus up to twelve membrane bundles may be placed into the receptacles in the header (see Fig. 1). The shape of the slots is desirably circular, but may also be square, rectangular, oval, rhomboidal, or any shape contemplated by one skilled in the art.

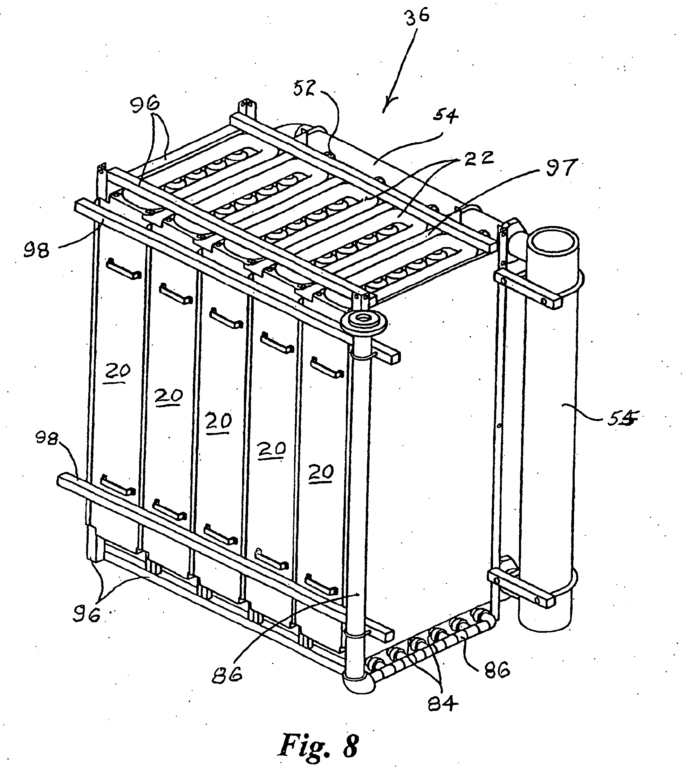

Each permeate collection header preferably contains at least one permeate port 52 (see Fig. 2), which connects to an external piping system or permeate manifold 54 (see Figs. 8, 10 and 11), such as in a plant, via a union or similar type of fitting. The permeate port 52 may plug into a coupling in the manifold 54 via radial O-ring seals in grooves 53 of the port. The permeate port may alternatively be designed with male or female threads, or as a socket or spigot fitting. However, the type of connection is not critical to the invention.

The preferably cylindrical potted ends of the fiber membrane bundles, as described in detail below, are inserted into the slots or other receptacles in the opposing faces of the headers to produce a watertight hydraulic connection between the headers and the lumens in the plurality of hollow fiber membranes. However, the potted ends of the fiber membrane bundles are easily removable from the headers, such that there is a separable connection between the potted ends and the receptacle. The permeate collection header has releasable closures (not shown), such as but not limited to valves or spring loaded mechanisms, which allow for hydraulic isolation of the slots or other receptacles in the header from the plurality of lumens in the hollow fiber membranes and the feed liquid. The closure is released when pressure from insertion of the potted end of the membrane element into the slot is removed, allowing the entire module to be used for filtration while a defective element is being replaced or is missing, and also allowing for bypass of a particular element in the module.

Each fiber bundle for use in the present invention is modular, thus permitting easy service and replacement of fiber bundles. In one embodiment, each fiber bundle is potted on both ends into a uniquely molded single piece fitting or bundle connector, which is preferably injection molded, so that there are two bundle connectors on each modular fiber bundle element. The potting area on the bundle connector is preferably circular, but may also be a shape such as square, oval, etc. without affecting the invention. In a preferred embodiment, there are two "legs" or fasteners oriented 180 degrees to each other on the bundle connector that mate up to mounting tabs on the header when the bundle connector is properly seated over the header receptacle. Connection may also be achieved by quick-connect fittings, as previously described. One or more O-rings on each receptacle in the header provides water- and airtight seals between the header receptacle and the bundle connection. When defective bundles are removed for repair, the resulting open header receptacles are preferably covered with a cap overmold or similar device so that filtration using the module may be continued.

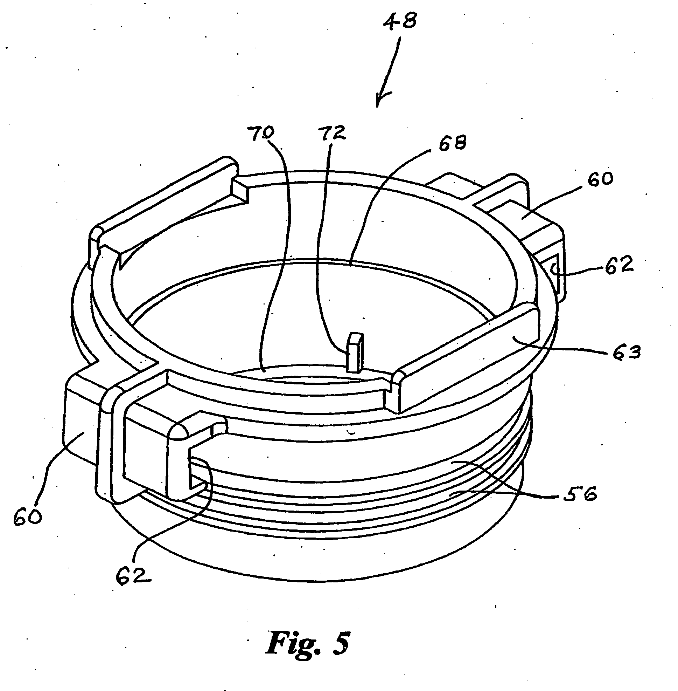

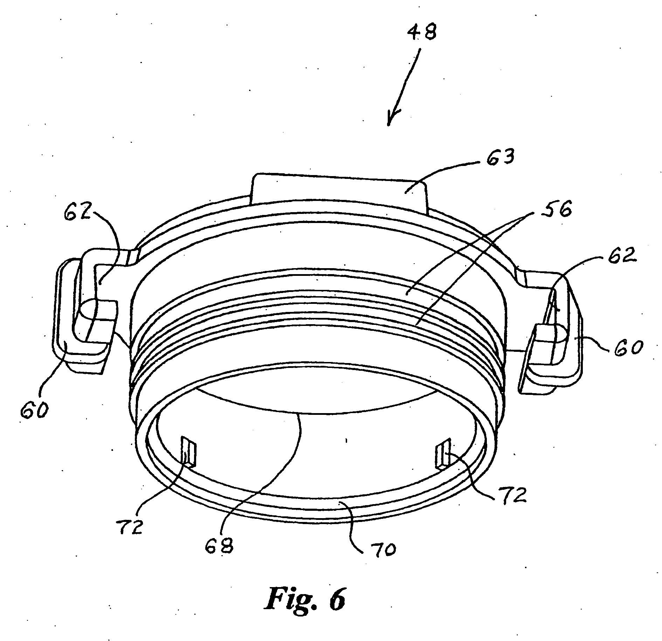

In a preferred embodiment, referring to Fig. 1, the membrane filtration element 24 is comprised of a hollow fiber membrane bundle 28 and two bundle connectors 48. Opposing ends of the hollow fiber membrane bundle 28 are potted into a bundle connector 48 (one connector at each end of the hollow fiber membrane bundle 28). The bundle connector 48 allows for a separable and hermetic seal between the lumens of the hollow fiber membrane bundle 28 and the mating receptacle 26 on the collection header 22. The bundle connector 28 seals to the inside surface of a mating receptacle 26 on the collection header 28 via two O-rings (not shown) provided in grooves 56 around the outer periphery of the bundle connector 28 (See Figs. 5 and 6). The bundle connector therefore makes a radial seal with the inside surface of the mating receptacle on the collection header.

As shown in Fig. 1, twelve filtration elements 24, with their respective bundle connectors are plugged (replaceably) into two collection headers 22 of a filtration module 20. As shown in Fig. 8, five of these modules 20, for example, may be combined in a rack of a modular filtration device 36.

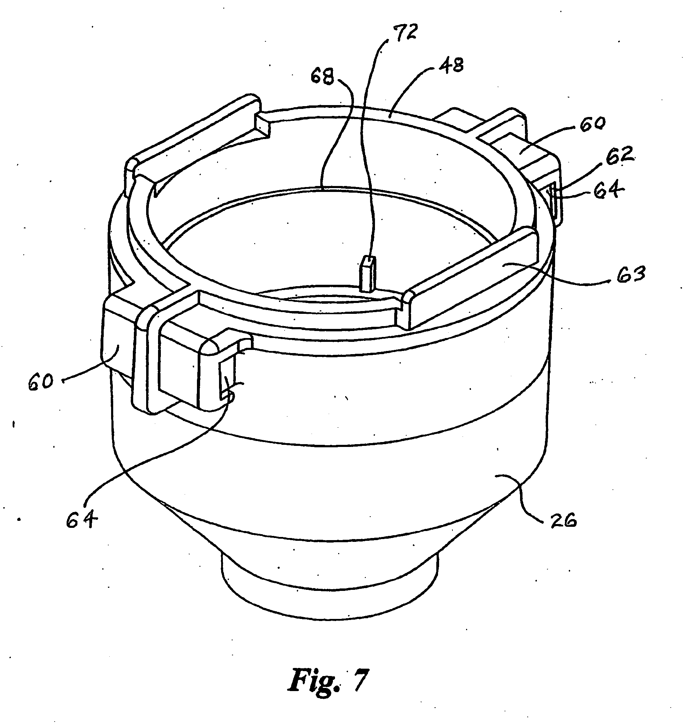

Referring to Figs. 5-7, The bundle connector 48 has two hook-shaped outer protrusions or ears 60 oriented at 180 degrees to each other. With a small clockwise rotation of the bundle connector the two ears 60 on the device engage by inwardly facing grooves 62 with two mating tabs 64 on the receptacle 26 on the collection header. The purpose of these ears 60 is to prevent disengagement of the bundle connector from the receptacle on the collection header during operation. The ears 60 on the bundle connector and tabs 64 on the receptacle have features that allow the bundle connector and receptacle to easily engage and lock together. The two may be easily disengaged without destroying either the bundle connector 48 or the receptacle 26. The mating parts on the bundle connector and receptacle also incorporate stops (not shown) that prevent the ears 60 on the bundle connector from turning past the tabs 64 on the receptacle on the collection header.

While the bundle connector 48 in the drawings is shown with two ears engaging with two tabs, it will be understood that the bundle connector could have two or more ears preferably oriented at equally spaced intervals around the periphery of the bundle connector, and engaging with a like number of corresponding tabs spaced around the mating receptacle 26. It will also be understood that the tabs and ears could be reversed, so that the ears are on the receptacle and the tabs are on the bundle connector.

The ears should engage with the mating tabs with a small clockwise or counterclockwise rotation in such a manner that the bundle connector is prevented from disengaging from the receptacle of the collection header during system operation, i.e., by preventing rotation in the opposite direction. This is prevented by locking features on the ears and/or tabs. The locking features between the ears and the tabs can be of any design which allows the two components to be locked together and easily unlocked without destroying either the bundle connector or the receptacle on the collection header. For example, the locking features could include an in-molded circular bump and notch system, a spring-loaded ball and detent system, a pin and hole system, or the like (not shown). The bundle connector and/or the receptacle may further have positive stop features which prevent the respective bundle connector ears from engaging with the receptacle tabs if rotated in the wrong direction. The ears and/or the tabs of the bundle connector and the receptacle may also have stop features which prevent the ears of the bundle connector from rotating beyond the mating tabs on the receptacle during the locking motion.

The bundle connector may be made of any material which allows optimum adhesion between the bundle connector and the potting material for the hollow fibers. The bundle connector is preferably made of polysulfone, but other materials, such as polyethersulfones, ABS, PVC, polyolefin, or even a metal such as 316 stainless steel, may be used. As shown in Fig. 3, the end of a hollow fiber membrane bundle 28 is secured in the bundle connector 48 by a suitable potting material 66, typically epoxy resin, although other potting, materials may be used instead. The potting of the end of the hollow fiber bundle in the bundle connector may be carried out in a conventional manner, typically by sealing the lumen ends, inserting the end of the hollow fiber bundle in the bundle connector, and then placing the end of the hollow fiber bundle in a bath of liquid resin to allow the resin to permeate up and around the individual fibers of the bundle by capillary action.

The epoxy or other potting material can be extended above the upper edge of the bundle connector by way of a removable "wall extension" placed around the inner diameter or outer diameter of the bundle connector. The epoxy can then be filled to the top edge of the wall extension. It is preferable to be able to remove this wall after the epoxy has hardened, thereby forming an epoxy extension above the top surface of the bundle connector. This wall extension can be formed as part of the bundle connector or inserted into the bundle connector as a separate piece prior to pouring the epoxy. The wall extension inserted as a separate piece can be formed out of tape, polyethylene film, polypropylene film, or the extension inserted as a separate piece can be formed out of tape, polyethylene film, polypropylene film, or other flexible material. If the wall extension is formed as part of the bundle connector, the material of the wall extension will obviously be the same material as the rest of the bundle connector.

To further assist in trapping or retaining the potting material in the bundle connector, the bundle connector may be provided with one or more retaining features in the form of surface irregularities on its inner surface. Such features include, for example, an interior surface roughness or texture, or one or more grooves 68, to increase the contact surface area; a draft angle on the inside surface of the bundle connector, which may be between about 0.5 and 6 degrees from the longitudinal axis, sloping outwardly from the distal end to the proximal end of the bundle connector; undercut edges 70 on the distal end of the bundle connector; and/or axial rib extrusions 72 on the inside surface (here shown adjacent to the distal end of the bundle connector), in order to prevent rotational movement of the solidified potting material in the bundle connector. It will be understood that other orientations of these surface irregularities could also be used, such as annular ribs, axial grooves, diagonal ribs and/or grooves, etc.

While the bundle connector is shown in the drawings to have a circular cross-section, other geometries of bundle connector may be employed, including rectangular, square, oval, elliptical, hexagonal, etc. The bundle connector preferably has an internal diameter, based on a circular cross-section, in a range of about 10 to 2,000 mm, preferably in a range of about 10 to 100 mm.

The outer surface of the bundle connector has a shape and size which closely fits the interior surface of the mating receptacle 26. The receptacle on the collection header may be a seamless part of the collection header itself, or it may be a separate component which is permanently or non-permanently joined to the collection header. Therefore, it is possible to replace the bundle of potted fibers plus the attached bundle connectors without having to replace the entire collection header with all of the other fiber bundles (which may still be operable) of the module. In the case of a bundle connector and receptacle having circular cross-sections, the hermetic seal between the bundle connector and receptacle may be formed by one or more O-rings on the inside surface of the receptacle and/or on the outside surface of the bundle connector. In the case of non-circular bundle connector geometries, suitably shaped and sized gaskets may be employed to effect the seal.
Surface irregularities in the form of integral sealing projections may additionally or alternatively be provided on the receptacle and/or bundle connector surfaces.

It will be understood, of course, in the case of non-circular bundle connector geometries, that the engagement of the ears and mating tabs to lock the bundle connector in place in the receptacle cannot take place by a twist locking motion, but instead will occur, for example, by a snap lock mechanism as the lower edges of the ears 60 snap over the tabs 64. In either case, the engagement of the ears and tabs serves to hold the bundle connector firmly in the receptacle in a hermetically sealed condition. In addition to locking the bundle connector into the receptacle, the ears or tabs on the exterior of the bundle connector can be used as external grips for tool attachment during servicing of the hollow fiber membrane bundle. Additionally or alternatively, the bundle connector can be gripped at the flat surfaces 63 adjacent the proximal end of the bundle connector. The ears or tabs also allow the bundle connector to be easily locked into devices such as test equipment during manufacturing or service in the field.

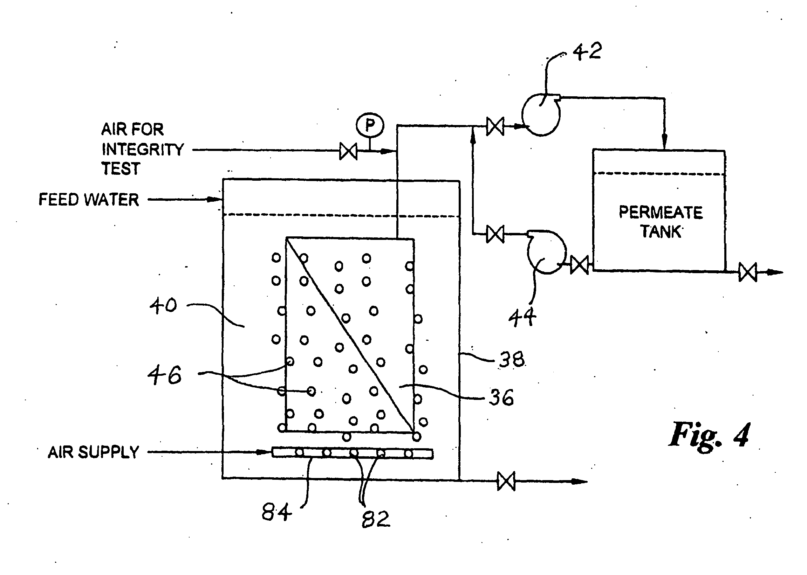

In an alternative embodiment shown in Fig. 4, a rubbery or elastomeric mesh tube 74 is stretched around the end of the hollow fiber bundle 28 prior to potting of the bundle end in the bundle connector 48. This mesh tube does not allow the fibers to move appreciably in the potting region during normal operations for which the filtration element is intended. Instead, any motion of the fibers is diverted to the end of the rubbery mesh, which may extend, for example, about one-quarter to several inches from the potting interface. Thus, hollow fibers used for ultra- and microfiltration are delicate and subject to damage from excessive forces and fatigue by repeated bending. At the interface with the potting material, the fibers are prone to be damaged by stresses from hydraulic forces during filtration. Pulling and bending occur at this location. The rubbery mesh tube serves to minimize the pulling and bending near the interface and transfers these toward the more freely moving sections of the fibers which can tolerate the pulling and bending more readily.

Instead of a mesh tube, a continuous rubber tube may be used. The mesh or continuous tube preferably has a durometer reading of 70 or less on the A scale. If a mesh is used, it may be extruded, knit or woven. A particularly preferred elastomer is Kraton^{®}, which is commercially available in FDA approved grades. The reason for the low durometer requirement is that many hollow fibers used for filtration are prone to kinking if pinched between hard surfaces. However, the flexible rubber mesh or continuous tube of this embodiment conforms to the shape of the fibers when pressed against them, when the fiber bundles are handled frequently during manufacture. This minimizes the stresses and resulting damage to the fibers in the area of the potting.

It will be understood, particularly in the case of a mesh tube, that the tube material will be embedded in the potting material itself, especially in the case of low packing density bundles. That is, instead of being located between the interior of the connector and the exterior of the potting, the tube will be located adjacent the interior of the connector and in or on the potting. Moreover, the tube is not necessarily elastomeric, but can be a rigid or semi-rigid material having a soft and non-abrasive surface which circumscribes the area in the potting filled with the fiber membranes.

In another embodiment (not shown), the fibers are also potted into a second molded fitting. When inserted completely into the second fitting, a flange on the potted end abuts a flange on the second fitting, thus preventing the potted end from slipping through the second fitting. Additionally, this arrangement allows the potted fiber bundle to rotate freely within the second fitting, so that the fiber bundle does not become twisted during bundle assembly or replacement. Together, the potted fiber bundle, the flanges, and the second fitting comprise a "fiber bundle assembly." This fiber bundle assembly also makes a water- and airtight connection with the preferably circular receiving slots or other receptacles in both the top and bottom headers in a vertical arrangement, or in the opposing adjacent headers in a horizontal configuration. As previously described, such a tight connection is also achieved by means of a secure attachment scheme between the fiber bundle assembly, the receptacles on the opposing headers, and one or more O-rings located on either the receptacle and/or the potted fiber bundle.

In known filtration modules for submerged membrane applications, the fibers are potted directly into permeate collection headers, thus securing the fiber ends and providing a conduit for permeate collection. Potting fibers into headers is typically a multi-step process, which may be very sensitive to ambient conditions and often becomes increasingly difficult to carry out with an increase in the size and cross-sectional area of the permeate collection header in which the fibers are potted. According to the present invention, the potted portion of the membranes and the permeate collection header are independent physical units, rather than the hollow fibers being potted directly into the permeate collection header. The potted fibers may be connected to the header by inserting the circular potted portion into the circular slots or other receptacle in the permeate header. The advantage to the separate design is that the potted portion is easily removable from the header.

In another embodiment (not shown), the potted hollow fiber membrane elements are provided as U-shaped bundles of hollow fiber membranes, such that two preferably cylindrical potted ends of the bundle may be inserted into two slots or receptacles in the same row or into adjacent rows of the same permeate collection header. Although such a configuration may be desirable for economic reasons, aeration may be more problematic and there may be a greater chance of tangling fibers.

In another embodiment, the bottom ends of the fibers are sealed, which may be desirable for shorter fiber lengths. In contrast, longer fibers require suction of permeate from both ends because of the substantial pressure drop through the fiber lumen. If suction is performed from only one end, a pressure differential could result along the length of the fibers, leading to uneven foulant layer growth because the foulant layer near the end of the fiber nearest the header would grow at a much greater rate than the sealed end, where suction pressure is lower. However, suction from both ends of long fiber bundles ensures equal (or nearly equal) foulant layer growth down the length of the fibers. If the bottom ends of the fibers are sealed, it is preferred that only one header, the top header in a vertical orientation, is a permeate collection header.

In both of the last-described embodiments, only one header may be necessary or desirable for each module. Such configurations may be desirable because the use of only one header reduces both the cost of the module and the number of parts contained therein.

In one embodiment shown in Fig. 9, each receptacle 26 in a header 22 has a central concentric cylindrical passage 76 for flow of the feed liquid. This passage is hydraulically connected to the feed liquid when a membrane element is inserted into the receptacle. The cylindrical passage 76 spans the thickness of the header and exits the top face 78 of the header such that the feed liquid, which flows freely through the cylindrical passage, is prevented from mixing with the permeate inside the header. Accordingly, the flow of the feed liquid (as it rises upward due to the cleaning action of agitation by aeration or other means) is prevented from facing a dead-end at the top of the element where the fibers enter the potted end 32.

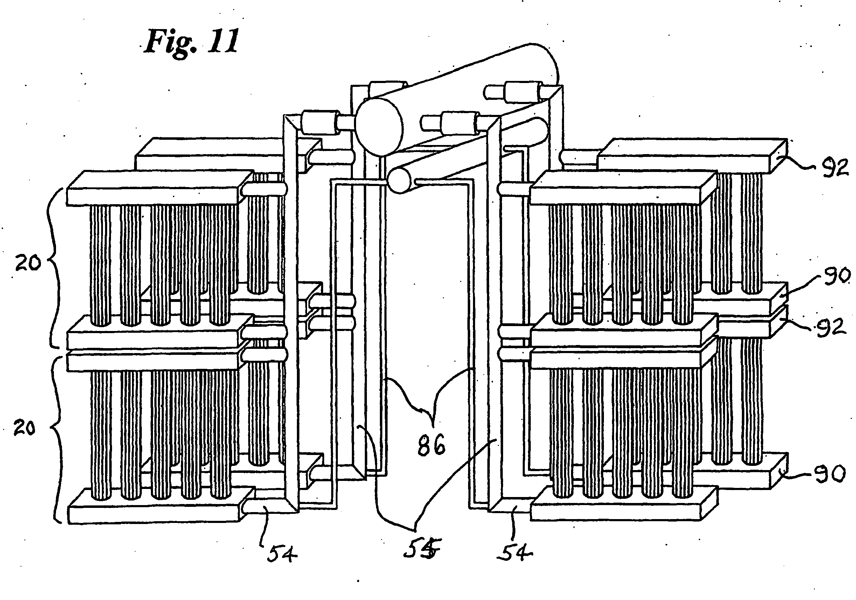

Alternatively, as also shown in Fig. 9, the cylindrical passage 76 may also be used to insert a vertical aeration tube 80 that spans the distance between the two parallel headers. When a membrane element 24 is inserted into the receptacle 26, this aeration tube 80 is preferably concentrically and centrally located inside the element. The tube preferably has a plurality of apertures 82 whose size depends on the air pressure and flow rate desired. The aeration tube effects aeration in a radially outward direction, which exposes the entire length of the fiber bundles to a very thorough and homogeneous cleaning action. The tube is connected to an air pipe (not shown) located within the inner volume of the header, which connects up to a main air feed pipe or manifold 86 (see Figs. 8 and 11) located outside the header. The air pipe in the header is thus isolated from the permeate flowing through the header. The vertical aeration tube is configured for either continuous aeration or application of air as intermittent pressurized pulses (air whipping). This radial mode of aeration may be used exclusively or in addition to aeration from diffusers located next to the bottom headers and/or parallel to and outside the fiber bundles.

Specifically, aeration may be provided from at least one aeration diffuser, as shown in Figs. 2, 4, 8 and 10. There is preferably one aeration diffuser 84 for each bundle row and each aeration diffuser preferably has at least one hole or opening for each bundle in the row. The holes 82 in the aeration diffusers are preferably circular, but may be any other shape, such as square, triangle, oval, etc. The holes 82 are preferably oriented vertically, but may also be oriented toward the bundle rows. In another embodiment, one aeration diffuser comprises equally spaced parallel tubes between bundle rows, one tube per bundle row, and each tube contains a hole for each bundle in the row. In both embodiments, each hole emits pressurized air that provides aeration, whipping, and scouring energy for the two fiber bundles on either side of the diffuser or tube. Air thus flows through the inside volume of the aeration diffuser, through the holes in the aeration diffuser, and then up along the outside of the active lengths of the fiber bundles.

The aeration diffusers may be prepared from the materials described earlier by any method known in the art as previously described. Each aeration diffuser desirably has two ends for attachment to the support structures of the module, preferably using no fasteners, and a connection port to connect to an outside air pipe system 86. The aeration diffuser port preferably connects to an air piping system in a plant, preferably via a union or similar pipe fitting, and is preferably designed with male or female threads, or as a socket or spigot fitting. However, the means of connection is not critical to the invention.

If the headers in a module are spaced vertically apart, forming an upper and a lower header, as shown in Figs. 1, 2 and 8, the lower header is preferably a permeate collection header and the aeration diffuser(s) 84 are preferably located adjacent to this lower header, parallel to the row of receptacles in it. The aeration diffuser thus effects aeration along the entire active membrane length. If the header contains more than one row of receptacles 26, the aeration diffuser(s) are preferably located between the rows. Additional aeration diffusers may be located in the same horizontal plane as the first diffuser and between two adjacent modules in a device.

Alternatively, if the headers are oriented in a horizontally spaced configuration relative to one another, the aeration diffusers 84 are preferably parallel to the longitudinal axis of the membrane elements and below the lowest membrane element, as shown in Fig. 10. If there is more than one aeration diffuser, they are preferably coplanar.

The aeration diffusers may be integrated into the structure of the membrane module so that they are molded or machined with the rest of the permeate collection header, which would reduce cost and the number of parts in the module. Alternatively, the aeration diffuser(s) may be installed separately in a desired spatial relationship relative to the rest of the fiber bundles, which would reduce the expense associated with molding complex parts.

A fiber bundle may thus be exposed to aeration from the bottom, from both sides and/or optionally from inside (radial aeration), which enhances the cleaning action. The mode of aeration used may be continuous aeration or air whipping in the form of intermittent pulses.

In one embodiment, each permeate collection header 22 further comprises an open area between two rows of receptacles 26 or slots, as shown in Fig. 2. The open area is preferably generally rectangular, but may also be square, circular, elliptical, or any other shape. The open area is designed for free flow of the liquid to be filtered. In the vertical orientation of the permeate collection headers, the aeration diffuser(s) 84 are preferably located in the open area of the bottom permeate collection header.

In one embodiment, the modular membrane filtration device according to the invention comprises at least two modules, each as previously described. In one embodiment, the modules 20 are stacked in vertical columns such that one module is placed on top of another module, as shown for example in Fig. 11, which depicts several devices together. The modules 20, each configured such that the header planes are in horizontal orientation, are stacked one atop the other such that the lower header 90 of one module is on top of and completely covers the upper header 92 of a second module. In a preferred embodiment, the device contains about two to eight individual modules, which are preferably identical. However, it is also within the scope of the invention to utilize a greater number of modules, which may be different from one another.

As shown in Fig. 8, modules in a device may be connected to one another by the rigid bars or supports which maintain the fixed distances between each header. Connection to form a bank of devices or modules may be accomplished by connecting or indexing modules or devices side by side. Each header is preferably connected to a horizontal pipe or permeate manifold 54 via the permeate collection port 52 present on each header. All horizontal pipes, connecting the headers of individual modules, connect to a main permeate collection pipe 55 in the system. The modules are configured such that vacuum may be applied simultaneously to all of the component modules in a bank.

It will be noted, for example in Fig. 8, that the separate modules 20 are arranged side by side in a drawer-like fashion. These modules are provided in a frame or rack 96 having internal guide rails 97 on which the headers slide to allow the module to slide into and out of the frame. Since the header end connections (permeate ports) plug into a coupling in the permeate manifold, the modules may be easily unplugged from the manifold when the module is pulled from the frame for servicing. In use, the modules are held in the frame by locking bars 98.

Alternatively, as shown in Fig. 10, a module may contain two parallel vertical supports, in which the width of each support is approximately equal to the width of the headers. Each header is preferably attached with four fasteners (not shown) to the supports, two on each support.
However, the means of fastening is not critical to the invention. The supports preferably have retaining features for a single piece aeration diffuser that provides the aeration for each row of fiber bundles in the module. Illustrated in Fig, 11 is a filtration device which comprises four vertical stacks of two modules each (depicted with simplified membranes and headers). Such devices may be indexed side by side, forming a bank containing vertically stacked modules, such that the aeration energy of the bottom module provides partial aeration to the module directly above it.

In addition to the aeration diffusers in the individual modules which comprise the filtration device, the device may further comprise additional aeration diffusers located between adjacent modules and parallel to the aeration diffuser in each module.

A device having multiple modules containing horizontal membrane elements, as previously described in reference to Fig. 10, is also provided. In such a device, the modules are stacked on top of one another, such that the header planes form a vertical column. The headers thus form horizontally spaced vertically extending walls in which the permeate collection headers 22 define vertical flow channels that support the horizontally oriented membrane elements 24. The device having horizontal membranes may further comprise a row of aeration diffusers 84 below the lowest membranes in the lowest module to provide aeration and/or air whipping to all of the modules in the column.

In either the vertical or the horizontal configuration, the device preferably contains a shroud material 94 covering the outermost faces (see Fig. 1). The shroud material functions to contain the energy associated with aeration and, in particular, the energy resulting from air pulsation in an air whipping process. The shroud or walls around the module trap the upward flowing bubbles within the volume of the module so that the bubbles strike the fibers. Utilization of these bubbles prevents them from escaping outside, where their energy would be lost. The shroud 94 also functions to surround hollow fiber membranes within the confines of the module volume. Without an encompassing shroud, fibers may stray outside the module volume and become susceptible to damage by nearby modules that are being moved in and out of the feed tank for service, for example.

The shroud, material may be a porous, non-porous, rigid, non-rigid, woven, knit, extruded, or elastic material. For example, the shroud material may be a rigid material, such as polypropylene, polyethylene, or PVC; an elastic material, such as a rubber sheet; or a woven, non-rigid material, such as a fabric sheet. In the embodiment shown in Fig. 10, the two support structures (rigid membranes 50) on the module, which are preferably injection molded out of a glass-filled polypropylene material to provide rigidity to the structures, provide a shroud or wall on two sides of the module. Because the modules may be indexed side by side in a bank, walls may not be needed on the two touching sides. However, additional walls on the extremities of a bank or module system may be desirable. Shrouds 94 may be provided between the modules.

The present invention has several advantages over the prior art. For example, the small diameter of the fiber bundles (preferably about 20 to 100 mm) simplifies the potting process and makes it more controllable and amenable to automated potting techniques such as centrifugal potting. In such a method, bundles are inserted into a centrifuge just alter the epoxy is poured. The centrifuge imposes forces on the curing epoxy that help to eliminate bubbles in the epoxy, which are problematic because they are a source of leaks in the epoxy. This may reduce the labor cost and time required for potting, improve the reproducibility in potting, and increase the yield of the process.

In traditional filtration modules, a module containing a defective fiber must be hydraulically isolated from the rest of the system to repair or replace the fiber. Since the entire module must be taken off-line, a significant fraction of the total membrane surface area in the filtration system may be lost during the time required to repair or replace the fiber. In contrast, in the modules according to the present invention, the potted membrane bundles are easily removable from the module and may be simply disconnected from their receptacles. Therefore, only the fiber bundle having the defective fiber needs to be removed for repair, while the rest of the module is still available for filtration. Accordingly, the fi-action of the total available membrane surface area lost during fiber repair or replacement is significantly reduced.

Furthermore, in the modules according to the invention, the membrane elements are relatively smaller and have lower membrane surface areas than traditional membranes, as well as being conveniently and independently replaceable. Accordingly, the membranes for use in the modules may be formed of fibers with average rupture strength, which are relatively inexpensive, such as polypropylene. However, any fiber material known in the art would be appropriate for the present invention. The option of using average rupture strength fibers represents a significant economic advantage over some prior art modules, in which stronger but more expensive fibers, such as those containing reinforcement, were used to reduce fiber defects and to reduce the frequency of taking an entire module offline for fiber repair or replacement. According to the present invention, since the membrane bundles can be replaced conveniently and independently without having to take the module offline for significant periods of time, they need not necessarily be reinforced at additional manufacturing cost. If a fiber does break, a smaller fraction of the entire system would be offline for a shorter time period.

Finally, the module design according to the invention makes the membranes more amenable to cleaning using air whipping by applying air as intermittent pulses. The air whipping process significantly reduces the fouling rate of membranes and represents significant reduction in aeration costs as compared with the continuous or intermittent modes of aeration that are typically used in submerged membrane applications. The constitution of the module as an assemblage of smaller membrane elements (bundles) helps in uniform dissipation of energy associated with an air pulse, which in turn improves the cleaning efficiency. Additionally, the shroud material surrounding the rows of stacked modules helps contain the energy associated with air pulses inside the device.

## Claims

1. A modular membrane filtration device (36) for outside-in membrane filtration of a feed liquid (40) containing at least one suspended solid, the device (36) comprising at least one module (20) comprising at least one header (22, 90, 92) which is an integral permeate collection header (22, 90, 92) having a plurality of receptacles (26) for receiving a plurality of membrane elements (24), wherein each membrane element (24) comprises at least one potted hollow fiber membrane bundle (28) comprising a plurality of hollow fiber membranes (30) oriented transverse to the at least one header (22, 90, 92), each membrane element (24) having a separable connection between a potted end (32) of the hollow fiber membrane bundle (28) and one of the receptacles (26) in the at least one permeate collection header (22, 90, 92), and wherein the separable connection provides a watertight hydraulic connection between the at least one permeate collection header (22, 90, 92) and lumens (34) in the hollow fiber membranes;
**characterized in that**
the modular device (20) further comprises a releasable closure for detaching one of the membrane elements (24) from one of the receptacles (26), such that when the element (24) is detached, the closure hydraulically isolates the receptacle (26) without the membrane element (24) from the feed liquid.

2. The modular membrane filtration device (36) according to claim 1, wherein the at least one module (20) comprises two headers (90, 92) and at least some of the plurality of hollow fiber membranes (30) has an overlength of about 0.2% to 20% of a distance between the two headers(90, 92).

3. The modular membrane filtration device (36) according to claim 2, wherein the overlength is greater than 5% to about 10%.

4. The modular membrane filtration device (36) according to any of the preceding claims, wherein the at least one module (20) comprises two headers (90, 92) spaced vertically or horizontally apart and wherein the device (36) further comprises a rigid support (50) connecting the two headers (90, 92) to maintain a fixed distance.

5. The modular membrane filtration device (36) according to any of the preceding claims, wherein the at least one permeate collection header (22) comprises at least one row of receptacles (26) for receiving the plurality of membrane elements (24).

6. The modular membrane filtration device (36) according to any of the preceding claims, wherein each of the receptacles (26) has a shape selected from the group consisting of circular, oval, square, rectangular, and rhomboidal.

7. The modular membrane filtration device (36) according to any of the preceding claims, wherein the closure is selected from the group consisting of a valve and a spring loaded mechanism.

8. The modular membrane filtration device (36) according to any of the preceding claims, wherein the modular device (20) comprises a device (48) for quick attachment or detachment of the membrane element (24) from the plurality of receptacles (26).

9. The modular membrane filtration device (36) according to any of the preceding claims, wherein the device (20) comprises at least two permeate collection headers (90, 92) spaced apart in a parallel configuration, and further comprises at least one aeration diffuser (84) having a plurality of apertures (82) to supply a gas in outer proximity to the hollow fiber membranes (30).

10. The modular membrane filtration device (36) according to claim 9, wherein the aeration tube (84) is configured for continuous aeration and for application of air as intermittent pulses.

11. The modular membrane filtration device (36) according to either of claims 9 or 10, comprising a plurality of aeration diffusers (84) arranged adjacent a bottom of the at least one module (20).

12. The modular membrane filtration device (36) according to any of claims 9 to 11, wherein the aeration diffusers (84) comprise perforated aeration tubes arranged parallel to a longitudinal axis of the hollow fiber membrane bundle (28).

13. The modular membrane filtration device (36) according to claim 12, wherein the perforated aeration tubes are arranged one inside each hollow fiber membrane bundle (28).

14. The modular membrane filtration device (36) according to any of claims 9 to 13, wherein the at least one permeate collection header (90, 92) comprises at least two rows of receptacles (26) and at least one open area between the at least two rows of receptacles (26) for free flow of the feed liquid, and wherein the at least one open area contains at least one aeration diffuser (84).

15. The modular membrane filtration device (36) according to any of the preceding claims, wherein the at least one module (20) comprises two headers (90, 92) spaced horizontally apart in a parallel configuration with membrane elements (24) having longitudinal axes extending substantially horizontally between the headers, and further comprising at least one aeration diffuser (84) arranged parallel to a longitudinal axis of at least one of the plurality of membrane elements (24) and below the plurality of membrane elements (24).

16. The modular membrane filtration device (36) according to any of the preceding claims, wherein the device comprises at least two modules (20) each comprising two headers (90, 92) spaced vertically apart to form an upper and a lower header (90, 92), and the at least two modules (20) are stacked atop of one another to form a vertical column of modules (20) such that an upper header (92) of a first module (20) lies beneath a lower header (90) of a second module (20), and wherein the device (36) defines outer faces.

17. The modular membrane filtration device (36) according to claim 16, wherein the device (36) comprises about two to eight modules (20).

18. The modular membrane filtration device (36) according to either of claims 16 or 17 dependent from claim 9, further comprising a shroud material (94) covering the open outer faces of the at least one module (20), wherein the shroud material (94) surround the plurality of hollow fiber membranes (24) and contains energy produced by aeration within a module volume confined by the shroud material (94).

19. The modular membrane filtration device (36) according to claim 18, wherein the shroud (94) material is selected from the group consisting of a porous material, a non-porous material, a woven material, a knit material, an extruded material, a rigid material, an elastic material, and a non-rigid material.

20. The modular membrane filtration device (36) according to any of the preceding claims, wherein the device (36) is submergible.

21. The modular membrane filtration device (36) according to claim 20, wherein the device (36) is submergible in a feed liquid (40) such that membrane filtration can be effected by a vacuum created in the lumens (34) of the hollow fiber membranes (30) by a suction device.

22. The modular membrane filtration device (36) according to claim 20, wherein the device (36) is placeable in a pressurized enclosure such that membrane filtration can be effected by pressure in the enclosure.

23. The modular membrane filtration device (36) according to claim 9, wherein the at least one module (20) defines outer faces and comprises a shroud material (94) covering at least one open outer face of the outer faces, wherein the shroud material (94) surrounds the plurality of hollow fiber membranes (24) and contains energy produced by aeration within a volume confined by the outer faces of the device (36).

## Patentansprüche

1. Modulare Membranfiltrationsvorrichtung (36) zur Outside-in-Membranfiltration einer Speiseflüssigkeit (40), die mindestens einen Schwebstoff enthält, wobei die Vorrichtung (36) mindestens ein Modul (20) aufweist, das mindestens ein Kopfteil (22, 90, 92) aufweist, das ein integrales Permeatsammelkopfteil (22, 90, 92) ist, das eine Vielzahl von Aufnahmegefäßen (26) zur Aufnahme einer Vielzahl von Membranelementen (24) hat, wobei jedes Membranelement (24) mindestens ein gefaßtes Hohlfasermembranbündel (28) aufweist, das eine Vielzahl von Hohlfasermembranen (30) aufweist, die quer zu dem mindestens eine Kopfteil (22, 90, 92) orientiert sind, wobei jedes Membranelement (24) eine trennbare Verbindung zwischen einem gefaßten Ende (32) des Hohlfasermembranbündels (28) und einem der Aufnahmegefäße (26) in dem mindestens einen Permeatsammelkopfteil (22, 90, 92) hat, und wobei die trennbare Verbindung eine wasserdichte hydraulische Verbindung zwischen dem mindestens einen Permeatsammelkopfteil (22, 90, 92) und Lumen (34) in den Hohlfasermembranen herstellt;
**dadurch gekennzeichnet, dass** die modulare Einrichtung (20) ferner aufweist: einen lösbaren Verschluss zum Lösen eines der Membranelemente (24) von einem der Aufnahmegefäße (26) derart, dass dann, wenn das Element (24) gelöst ist, der Verschluss das Aufnahmegefäß (26) ohne das Membranelement (24) hydraulisch von der Speiseflüssigkeit trennt.

2. Modulare Membranfiltrationsvorrichtung (36) nach Anspruch 1, wobei das mindestens eine Modul (20) zwei Kopfteile (90, 92) aufweist und mindestens einige der Vielzahl von Hohlfasermembranen (30) eine Überlänge von ungefähr 0,2 % bis 20 % eines Abstands zwischen den zwei Kopfteilen (90, 92) haben.

3. Modulare Membranfiltrationsvorrichtung (36) nach Anspruch 2, wobei die Überlänge größer als 5 % bis ungefähr 10 % ist.

4. Modulare Membranfiltrationsvorrichtung (36) nach einem der vorhergehenden Ansprüche, wobei das mindestens eine Modul (20) zwei Kopfteile (90, 92) aufweist, die vertikal oder horizontal voneinander beabstandet sind, und wobei die Vorrichtung (36) ferner eine starre Stütze (50) aufweist, welche die zwei Kopfteile (90, 92) miteinander verbindet, um einen unveränderlichen Abstand aufrechtzuerhalten.

5. Modulare Membranfiltrationsvorrichtung (36) nach einem der vorhergehenden Ansprüche, wobei das mindestens ein Permeatsammelkopfteil (22) mindestens eine Reihe von Aufnahmegefäßen (26) zur Aufnahme der Vielzahl von Membranelementen (24) aufweist.

6. Modulare Membranfiltrationsvorrichtung (36) nach einem der vorhergehenden Ansprüche, wobei jedes der Aufnahmegefäße (26) eine Gestalt hat, die aus der Gruppe ausgewählt ist, die aus einer kreisförmigen, ovalen, quadratischen, rechteckigen und rautenförmigen Gestalt besteht.

7. Modulare Membranfiltrationsvorrichtung (36) nach einem der vorhergehenden Ansprüche, wobei der Verschluss aus der Gruppe ausgewählt ist, die aus einem Ventil und einer federbelasteten Einrichtung besteht.

8. Modulare Membranfiltrationsvorrichtung (36) nach einem der vorhergehenden Ansprüche, wobei die modulare Einrichtung (20) eine Einrichtung (48) zum schnellen Anbringen oder Lösen des Membranelements (24) von der Vielzahl von Aufnahmegefäßen (26) aufweist.

9. Modulare Membranfiltrationsvorrichtung (36) nach einem der vorhergehenden Ansprüche, wobei die Einrichtung (20) mindestens zwei Permeatsammelkopfteile (90, 92) aufweist, die in einer parallelen Konfiguration voneinander beabstandet sind, und ferner mindestens einen Lüftungsdiffusor (84) aufweist, der eine Vielzahl von Öffnungen (82) hat, um ein Gas in die äußere Nähe der Hohlfasermembranen (30) zuzuführen.

10. Modulare Membranfiltrationsvorrichtung (36) nach Anspruch 9, wobei das Lüftungsrohr (84) zur kontinuierlichen Lüftung und zum Aufbringen von Luft als intermittierende Impulse ausgebildet ist.

11. Modulare Membranfiltrationsvorrichtung (36) nach einem der Ansprüche 9 oder 10, die eine Vielzahl von Lüftungsdiffusoren (84) aufweist, die an einem Boden des mindestens einen Moduls (20) angrenzend angeordnet sind.

12. Modulare Membranfiltrationsvorrichtung (36) nach einem der Ansprüche 9 bis 11, wobei die Lüftungsdiffusoren (84) perforierte Lüftungsrohre aufweisen, die parallel zu einer Längsachse des Hohlfasermembranbündels (28) angeordnet sind.

13. Modulare Membranfiltrationsvorrichtung (36) nach Anspruch 12, wobei die perforierten Lüftungsrohre so angeordnet sind, dass jeweils eines innerhalb jedes Hohlfasermembranbündels ist.

14. Modulare Membranfiltrationsvorrichtung (36) nach einem der Ansprüche 9 bis 13, wobei das mindestens eine Permeatsammelkopfteil (90, 92) aufweist: mindestens zwei Reihen von Aufnahmegefäßen (26) und mindestens einen offenen Bereich zwischen den mindestens zwei Reihen von Aufnahmegefäßen (26) für den freien Durchfluss der Speiseflüssigkeit, und wobei der mindestens eine offene Bereich mindestens einen Lüftungsdiffusor (84) enthält.

15. Modulare Membranfiltrationsvorrichtung (36) nach einem der vorhergehenden Ansprüche, wobei das mindestens eine Modul (20) aufweist: zwei Kopfteile (90, 92), die in einer parallelen Konfiguration horizontal voneinander beabstandet sind, wobei Membranelemente (24) im Wesentlichen horizontal zwischen den Kopfteilen verlaufende Längsachsen haben, und ferner aufweist: mindestens einen Lüftungsdiffusor (84), der parallel zu einer Längsachse von mindestens einem der Vielzahl von Membranelementen (24) und unterhalb der Vielzahl von Membranelementen (24) angeordnet ist.

16. Modulare Membranfiltrationsvorrichtung (36) nach einem der vorhergehenden Ansprüche, wobei die Vorrichtung mindestens zwei Module (20) aufweist, die jeweils zwei Kopfteile (90, 92) aufweisen, die vertikal voneinander beabstandet sind, um ein oberes und ein unteres Kopfteil (90, 92) zu bilden, und die mindestens zwei Module (20) aufeinander gestapelt sind, um eine vertikale Säule von Modulen (20) derart zu bilden, dass ein oberes Kopfteil (92) eines ersten Moduls (20) unter ein unteres Kopfteil (90) eines zweiten Moduls (20) liegt, und wobei die Vorrichtung (36) äußere Flächen definiert.

17. Modulare Membranfiltrationsvorrichtung (36) nach Anspruch 16, wobei die Vorrichtung (36) ungefähr zwei bis acht Module (20) aufweist.

18. Modulare Membranfiltrationsvorrichtung (36) nach einem der Ansprüche 16 oder 17 in Abhängigkeit von Anspruch 9, die ferner ein Ummantelungsmaterial (94) aufweist, das die offenen äußeren Flächen des mindestens einen Moduls (20) bedeckt, wobei das Ummantelungsmaterial (94) die Vielzahl von Hohlfasermembranen (24) umgibt und Energie enthält, die durch Lüftung innerhalb eines von dem Ummantelungsmaterial (94) begrenzten Modulvolumens erzeugt wird.

19. Modulare Membranfiltrationsvorrichtung (36) nach Anspruch 18, wobei das Ummantelungsmaterial (94) aus der Gruppe ausgewählt ist, die besteht aus: einem porösem Material, einem nichtporösen Material, einem gewebten Material, einem gewirkten Material, einem extrudierten Material, einem steifen Material, einem elastischen Material und einem nichtsteifen Material.

20. Modulare Membranfiltrationsvorrichtung (36) nach einem der vorhergehenden Ansprüche, wobei die Vorrichtung (36) versenkbar ist.

21. Modulare Membranfiltrationsvorrichtung (36) nach Anspruch 20, wobei die Vorrichtung (36) in einer Speiseflüssigkeit (40) derart versenkbar ist, dass eine Membranfiltration durch ein Vakuum bewirkt werden kann, das von einer Saugeinrichtung in den Lumen (34) der Hohlfasermembranen (30) erzeugt wird.

22. Modulare Membranfiltrationsvorrichtung (36) nach Anspruch 20, wobei die Vorrichtung (36) in einem Druckgehäuse derart platzierbar ist, dass die Membranfiltration durch Druck in dem Gehäuse bewirkt werden kann.

23. Modulare Membranfiltrationsvorrichtung (36) nach Anspruch 9, wobei das mindestens eine Modul (20) äußere Flächen definiert und ein Ummantelungsmaterial (94) aufweist, das mindestens eine offene äußere Fläche der äußeren Flächen bedeckt, wobei das Ummantelungsmaterial (94) die Vielzahl von Hohlfasermembranen (24) umgibt und Energie enthält, die durch Lüftung innerhalb eines von den äußeren Flächen der Vorrichtung (36) begrenzten Volumens erzeugt wird.

## Revendications

1. Dispositif de filtration membranaire modulaire (36) pour une filtration membranaire depuis l'extérieur d'un liquide d'alimentation (40) contenant au moins un solide en suspension, le dispositif (36) comprenant au moins un module (20) comprenant au moins un collecteur (22, 90, 92) qui est un collecteur de perméat intégré (22, 90, 92) comportant une pluralité de réceptacles (26) destinés à recevoir une pluralité d'éléments de membrane (24), dans lequel chaque élément de membrane (24) comprend au moins un faisceau de membrane en fibre creuse enrobé (28) comprenant une pluralité de membranes en fibre creuse (30) orientées transversalement par rapport au au moins un collecteur (22, 90, 92), chaque élément de membrane (24) présentant une connexion amovible entre une extrémité enrobée (32) du faisceau de membrane en fibre creuse (28) et l'un des réceptacles (26) dans le au moins un collecteur de perméat (22, 90, 92) et dans lequel la connexion amovible assure une connexion hydraulique étanche entre le au moins un collecteur de perméat (22, 90, 92) et les lumières (34) dans les membranes en fibre creuse ;
**caractérisé en ce que** le dispositif modulaire (20) comprend en outre une fermeture amovible pour détacher un des éléments de membrane (24) d'un des réceptacles (26), de sorte que lorsque l'élément (24) est détaché, la fermeture isole hydrauliquement le réceptacle (26) sans l'élément de membrane (24) du liquide d'alimentation.

2. Dispositif de filtration membranaire modulaire (36) selon la revendication 1, dans lequel le au moins un module (20) comprend deux collecteurs (90, 92) et au moins une partie de la pluralité de membranes en fibre creuse (30) a une surlongueur d'environ 0,2 % à 20 % d'une distance entre les deux collecteurs (90, 92).

3. Dispositif de filtration membranaire modulaire (36) selon la revendication 2, dans lequel la surlongueur est supérieure à 5 % à environ 10 %.

4. Dispositif de filtration membranaire modulaire (36) selon l'une quelconque des revendications précédentes, dans lequel le au moins un module (20) comprend deux collecteurs (90, 92) espacés verticalement ou horizontalement et dans lequel le dispositif (36) comprend en outre un support rigide (50) reliant les deux collecteurs (90, 92) pour un maintien à une distance fixe.

5. Dispositif de filtration membranaire modulaire (36) selon l'une quelconque des revendications précédentes, dans lequel le au moins un collecteur de perméat (22) comprend au moins une rangée de réceptacles (26) destinés à recevoir la pluralité d'éléments de membrane (24).

6. Dispositif de filtration membranaire modulaire (36) selon l'une quelconque des revendications précédentes, dans lequel chacun des réceptacles (26) a une forme choisie dans le groupe constitué des formes circulaire, ovale, carrée, rectangulaire et rhomboïde.

7. Dispositif de filtration membranaire modulaire (36) selon l'une quelconque des revendications précédentes, dans lequel la fermeture est choisie dans le groupe constitué d'une soupape et d'un mécanisme à ressort.

8. Dispositif de filtration membranaire modulaire (36) selon l'une quelconque des revendications précédentes, dans lequel le dispositif modulaire (20) comprend un dispositif (48) pour un montage ou un démontage rapide de l'élément de membrane (24) sur la pluralité de réceptacles (26).

9. Dispositif de filtration membranaire modulaire (36) selon l'une quelconque des revendications précédentes, dans lequel le dispositif (20) comprend au moins deux collecteurs de perméat (90, 92) espacés en une configuration parallèle et comprend en outre au moins un diffuseur d'aération (84) ayant une pluralité d'ouvertures (82) pour fournir un gaz à proximité de l'extérieur des membranes en fibre creuse (30).

10. Dispositif de filtration membranaire modulaire (36) selon la revendication 9, dans lequel le tube d'aération (84) est configuré pour une aération continue et pour une application d'air par impulsions intermittentes.

11. Dispositif de filtration membranaire modulaire (36) selon l'une des revendications 9 ou 10, comprenant une pluralité de diffuseurs d'aération (84) agencés de façon adjacente à une base du au moins un module (20).

12. Dispositif de filtration membranaire modulaire (36) selon l'une quelconque des revendications 9 à 11, dans lequel les diffuseurs d'aération (84) comprennent des tubes d'aération perforés agencés parallèlement à un axe longitudinal du faisceau de membrane en fibre creuse (28).

13. Dispositif de filtration membranaire modulaire (36) selon la revendication 12, dans lequel les tubes d'aération perforés sont agencés chacun dans chaque membrane en fibre creuse du faisceau (28).

14. Dispositif de filtration membranaire modulaire (36) selon l'une quelconque des revendications 9 à 13, dans lequel le au moins un collecteur de perméat (90, 92) comprend au moins deux rangées de réceptacles (26) et au moins une zone ouverte entre les au moins deux rangées de réceptacles (26) pour un écoulement libre du liquide d'alimentation et dans lequel la au moins une zone ouverte contient au moins un diffuseur d'aération (84).

15. Dispositif de filtration membranaire modulaire (36) selon l'une quelconque des revendications précédentes, dans lequel le au moins un module (20) comprend deux collecteurs (90, 92) espacés horizontalement en configuration parallèle, des éléments de membrane (24) ayant des axes longitudinaux s'étendant sensiblement horizontalement entre les collecteurs et comprenant en outre au moins un diffuseur d'aération (84) agencé parallèlement à un axe longitudinal d'au moins un de la pluralité d'éléments de membrane (24) et sous la pluralité d'éléments de membrane (24).

16. Dispositif de filtration membranaire modulaire (36) selon l'une quelconque des revendications précédentes, dans lequel le dispositif comprend au moins deux modules (20) comprenant chacun deux collecteurs (90, 92) espacés verticalement pour former un collecteur supérieur et un collecteur inférieur (90, 92) et les au moins deux modules (20) sont empilés l'un sur l'autre pour former une colonne verticale de modules (20), de sorte qu'un collecteur supérieur (92) d'un premier module (20) se trouve sous un collecteur inférieur (90) d'un second module (20) et dans lequel le dispositif (36) définit des faces externes.

17. Dispositif de filtration membranaire modulaire (36) selon la revendication 16, dans lequel le dispositif (36) comprend environ deux à huit modules (20).

18. Dispositif de filtration membranaire modulaire (36) selon l'une quelconque des revendications 16 ou 17, dépendantes de la revendication 9, comprenant en outre un matériau de chemise (94) couvrant des faces externes ouvertes du au moins un module (20), dans lequel le matériau de chemise (94) entoure la pluralité de membranes en fibre creuse (24) et contient l'énergie produite par aération dans un volume de module confiné par le matériau de chemise (94).

19. Dispositif de filtration membranaire modulaire (36) selon la revendication 18, dans lequel le matériau de chemise (94) est choisi dans le groupe constitué d'un matériau poreux, d'un matériau non poreux, d'un matériau tissé, d'un matériau tricoté, d'un matériau extrudé, d'un matériau rigide, d'un matériau élastique et d'un matériau non rigide.

20. Dispositif de filtration membranaire modulaire (36) selon l'une quelconque des revendications précédentes, dans lequel le dispositif (36) est submersible.

21. Dispositif de filtration membranaire modulaire (36) selon la revendication 20, dans lequel le dispositif (36) est submersible dans un liquide d'alimentation (40), de sorte qu'une filtration membranaire puisse être effectuée par un vide créé dans les lumières (34) des membranes en fibre creuse (30) par un dispositif d'aspiration.

22. Dispositif de filtration membranaire modulaire (36) selon la revendication 20, dans lequel le dispositif (36) peut être placé dans une enceinte sous pression, de sorte qu'une filtration membranaire puisse être effectuée par la pression dans l'enceinte.

23. Dispositif de filtration membranaire modulaire (36) selon la revendication 9, dans lequel le au moins un module (20) définit des faces externes et comprend un matériau de chemise (94) couvrant au moins une face externe ouverte des faces externes, dans lequel le matériau de chemise (94) entoure la pluralité de membranes en fibre creuse (24) et contient l'énergie produite par une aération dans un volume confiné par les faces externes du dispositif (36).
